(19) **Europäisches Patentamt**
**European Patent Office**
**Office européen des brevets**

(11) **EP 3 527 627 B1**

(12) **EUROPEAN PATENT SPECIFICATION**

(45) Date of publication and mention
of the grant of the patent:
**17.03.2021 Bulletin 2021/11**

(21) Application number: **17861718.9**

(22) Date of filing: **06.10.2017**

(51) Int Cl.:
*C08L 101/00* *(2006.01)*  *C08L 67/00* *(2006.01)*
*C08L 69/00* *(2006.01)*  *C08L 77/00* *(2006.01)*
*C08L 93/04* *(2006.01)*  *C08K 5/101* *(2006.01)*
*C09F 1/02* *(2006.01)*  *C09F 1/04* *(2006.01)*

(86) International application number:
**PCT/JP2017/036532**

(87) International publication number:
**WO 2018/074273 (26.04.2018 Gazette 2018/17)**

(54) **COMPOSITE PLASTIC MOLDED PRODUCT**

FORMPRODUKT AUS VERBUNDKUNSTSTOFF

ARTICLE MOULÉ EN PLASTIQUE COMPOSITE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.10.2016 JP 2016203297**

(43) Date of publication of application:
**21.08.2019 Bulletin 2019/34**

(73) Proprietor: **Arakawa Chemical Industries, Ltd.
Osaka-shi
Osaka 541-0046 (JP)**

(72) Inventors:
• **SATO, Yoshimasa
Tsukuba-shi
Ibaraki 300-2611 (JP)**
• **HIKICHI, Kensuke
Tsukuba-shi
Ibaraki 300-2611 (JP)**

• **KASHIHARA, Tetsuya
Tsukuba-shi
Ibaraki 300-2611 (JP)**
• **MATSUSHITA, Yasuhiro
Tsukuba-shi
Ibaraki 300-2611 (JP)**

(74) Representative: **KIPA AB
P O Box 1065
251 10 Helsingborg (SE)**

(56) References cited:
**WO-A1-98/24848**          **WO-A1-2010/104144**
**WO-A1-2015/137403**      **WO-A2-2015/048415**
**WO-A2-2015/048421**      **JP-A- H05 171 112**
**JP-A- H09 227 773**       **JP-A- H09 241 515**
**JP-A- 2001 234 066**      **JP-A- 2009 161 573**
**JP-A- 2009 209 178**      **JP-A- 2017 052 945**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present invention relates to a composite plastic molded product.

BACKGROUND ART

A composite plastic molded product has excellent mechanical strength. Therefore, the composite plastic molded product is processed and formed into, for example, an injection-molded product, a film, a sheet, or a fiber, and is used for a wide variety of usage, for example, for electronic devices such as a mobile phone and a personal computer, and LED devices.

Examples of a base material for the composite plastic molded product include: general-purpose plastics such as polyvinyl chloride and polyethylene; engineering plastics such as polyamide, polycarbonate, and polyester; and super engineering plastics such as polyamide imide, polyphenylsulfone, and polyethersulfone. In particular, the engineering plastic is a base material with excellent heat resistance and high reliability, and is used for, for example, components of a liquid crystal television, electronic components such as an optical fiber, clothing fiber fabric, and automobile component. Moreover, at the time of molding engineer plastic, in order to enable easy processing and give flexibility, for example, a phthalate plasticizer is added. However, the phthalate plasticizer is not sufficiently compatible with the plastic base material, with the result that the plasticizer may seep out from the base material (hereinafter referred to as "bleedout"). Moreover, the phthalate plasticizer may have a harmful influence on a human health and an environment.

As a technology for solving the problem described above, for example, there has been known a thermoplastic resin composition in which a certain amount of organosiloxane is used with respect to a resin composition including styrene resin and thermoplastic resin (Patent Document 1). Moreover, there has also been known a thermoplastic resin composition containing: thermoplastic resin being polyamide resin, aliphatic polyester resin, or semiaromatic polyester resin; filler; and rosin (Patent Document 2)

Patent Document 3 discloses a composite molded polyester product comprising a lubricant and a polyester having excellent flowability, excellent heat resistance, moldability and good colour retention, wherein the lubricant consists of purified stabilized rosins with an alcohol compound and / or epoxy compounds, wherein the alcohol compound is a polyhydric alcohol.

Patent Document 4 discloses a composite molded polycarbonate product comprising a lubricant and a polyester having excellent flowability, excellent heat resistance, moldability and good colour retention, wherein the lubricant consists of purified stabilized rosins with an alcohol compound and / or epoxy compounds, wherein the alcohol compound is a polyhydric alcohol.

PRIOR ART DOCUMENT

Patent Document

Patent Document 1: JP 2012-072203 A
Patent Document 2: WO 2013/069365
Patent Document 3: JPH09241515
Patent Document 4: JPH0927773

SUMMARY OF THE INVENTION

However, in the invention disclosed in Patent Document 1, the bleedout cannot sufficiently be suppressed when styrene resin is used. Moreover, the invention is inferior in terms of moldability. With regard to the invention disclosed in Patent Document 2, coloring occurs at the time of molding.

The present invention has an object to provide a composite plastic molded product, which contains an additive being well compatible with engineering plastic, involves no coloring at the time of molding, and has excellent flexibility, bleedout resistance, and moldability.

As a result of extensive studies for development of the composite plastic molded product described above, the inventors have found that a composite plastic molded product containing specified rosin ester solves the problem described above.

More specifically, the present invention relates to a composite plastic molded product according to Items 1 to 5 below.

Item 1: a composite plastic molded product, comprising: (A) engineering plastic that is at least one kind selected from the group consisting of polycarbonate, polyamide, and polyester; and (B) rosin ester being a reactant of rosin and Cl-9 monohydric alcohol, in which the content of abietic acid-type resin acid and ester thereof having a conjugated double bond without an aromatic ring is less than 1 weight %, determined as specified below in the description, and in which the glass transition temperature, measured by the method defined in JIS K 7121, is equal to or less than -15°C, wherein the rosin ester contains dihydroabietic acid ester by equal to or larger than 15 weight% or contains tetrahydroabietic acid ester by equal to or larger than 10 weight%, wherein the total content of resin acid and ester thereof is 100 weight%, or wherein the (B) component contains dehydroabietic acid ester by equal to or larger than 40 weight%, wherein a total content of resin acid and ester is 100 weight%.

Item 2: a composite plastic molded product according to Item 1, wherein the (B) component has an esterification degree of equal to or larger than 94 weight%,determined as specified below in the description.

Item 3: a composite plastic molded product according to Item 1 or 2, wherein the (B) component has an acid value of equal to or smaller than 2 mgKOH/g, as determined based on JIS K 0070.

Item 4: a composite plastic molded product according to Items 1 to 3, wherein the rosins include at least one of disproportionated rosin and hydrogenated rosin.

Item 5: a composite plastic molded product according to Items 1 to 4, wherein the (A) component and the (B) component have a content ratio (solid weight) of (A)/ (B)=40/60 to 90/10.

EMBODIMENT FOR CARRYING OUT THE INVENTION

A composite plastic molded product (hereinafter referred to also as "molded product") according to the present invention contains engineering plastic (A) (hereinafter referred to as "(A) component") and specified rosin ester (B) (hereinafter referred to as "(B) component").

<As to (A) component>

The (A) component has such structure that a molecular chain thereof includes not only carbon but also oxygen or nitrogen. Therefore, the (A) component has excellent heat resistance. According to the present invention, the (A) component is least one kind selected from the group consisting of polycarbonate, polyamide, and polyester. A plurality of those components may be used.

The polyamide is not particularly limited. Various well-known polyamides may be used. Examples of the polyamide include 6-nylon, 6,6-nylon, 6,10-nylon, 12-nylon, 9-nylon, polyamide 4, and polyamide 12. Moreover, examples of the polyamide include aromatic nylons such as polyamide 6T, polyamide 9T, and polyamide 10T.

The weight-average molecular weight of the polyamide is not particularly limited. In view of compatibility with the (B) component, it is preferred that the weight-average molecular weight be from about 10,000 to about 60,000, more preferably from about 20,000 to about 50,000.

The polyester is not particularly limited. Various well-known polyesters may be used. Examples of the polyester include: aromatic polyesters such as polyethylene terephthalate, polybutylene terephthalate, polyethylene isophthalate, polybutylene isophthalate, poly-p-phenylene adipate, and poly-p-phenylene terephthalate; and aliphatic polyesters such as polyethylene adipate, polybutylene adipate, poly-$\varepsilon$-caprolactone, polylactic acid, polyhydroxy butylate, and polybutylene succinate.

The weight-average molecular weight of the polyester is not particularly limited. In view of the compatibility with the (B) component, it is preferred that the weight-average molecular weight be from about 10,000 to about 200,000, more preferably, from about 15,000 to about 150,000.

The polycarbonate is not particularly limited. Various well-known polycarbonates may be used. Examples of the polycarbonate include: polycarbonate which can be obtained by copolymerization of an aromatic dihydroxy compound and an aliphatic dihydroxy compound through transesterification under the presence of transesterification catalyst with carbonic diester as a carbonate source; and polycarbonate which can be obtained through a reaction of an aromatic dihydroxy compound and phosgene. Moreover, the polycarbonate may have a branch structure.

In the transesterification described above, carbonic diester may be used as a carbonate source. Examples of the carbonic diester include diphenyl carbonate, ditolyl carbonate, bis(chlorophenyl)carbonate, m-cresyl carbonate, dinaphthyl carbonate, dimethyl carbonate, diethyl carbonate, dibutyl carbonate, and dicyclohexyl carbonate. A plurality of those components may be used.

Examples of the aromatic dihydroxy compound include: bis(hydroxyaryl)alkanes such as bisphenol-A, tetrabromobisphenol-A, bis(4-hydroxyphenyl)methane, 1,1-bis(4-hydroxyphenyl)ethane, 2,2-bis(4-hydroxyphenyl) butane, 2,2 -bis(4-hydroxyphenyl)octane, 2,2-bis(4-hydroxy-3-methylphenyl)propane, 1,1-bis(3-t-butyl-4-hydroxyphenyl)propane , 2,2-bis(4-hydroxy-3,5-dimethylphenyl)propane, 2,2-bis(3-bromo-4-hydroxyphenyl)propane, 2,2-bis(3,5-dichloro-4-hydroxyphenyl)propane, 2,2-bis(3-phenyl-4-hydroxyphenyl)propane, 2,2-bis(3-cyclohexyl-4-hydroxyphenyl)propane, 1,1-bis(4-hydroxyphenyl)-1-phenylethane, and bis(4-hydroxyphenyl)diphenylmethane; bis(hydroxyaryl)cycloalkanes such as bisphenol-Z, 1,1-bis(4-hydroxyphenyl)cyclopentane and 1,1-bis(4-hydroxyphenyl)-3,3,5-trimethylcyclohexane; dihydroxydiaryl ethers such as 4,4'-dihydroxydiphenyl ether and 4,4'-dihydroxy-3,3'-dimethyldiphenyl ether; dihydroxydiaryl sulfides such as 4,4'-dihydroxydiphenyl sulfide and 4,4'-dihydroxy-3,3'-dimethyldiphenyl sulfide; dihydroxydiaryl sulfoxides such as 4,4'-dihydroxydiphenyl sulfoxide and 4,4'-dihydroxy-3,3'-dimethyldiphenyl sulfoxide; dihydroxydiaryl sulfones such as 4,4'-dihydroxydiphenyl sulfone and 4,4'-dihydroxy-3,3'-dimethyldiphenyl sulfone; hydroquinone; resorcin; and 4,4'-dihydroxydiphenyl. Among those, 2,2-bis(4-hydroxyphenyl)propane and 1,1-bis(4-hydroxyphenyl)cyclohexanane are preferred. A plurality of those components may be used.

As a catalyst for the transesterification, a well-known catalyst is suitably used. Examples of the catalyst include a basic compound and a transesterification catalyst. Among the catalysts, it is preferred to adopt a metal compound such as an alkali metal compound, an alkali earth metal compound, a nitrogen-containing metal compound, or a tin compound.

The weight-average molecular weight of the polycarbonate is not particularly limited. In view of compatibility with the (B) component, it is preferred that the weight-average molecular weight be from about 10,000 to about 100,000, more preferably from about 15,000 to about 80,000.

Among those, in view of high transparency, it is preferred that the (A) component contains at least polycarbonate.

The (A) component may contain, as needed, various well-known additives such as an antioxidant, an ultraviolet ray absorber, a pigment, a dye, a reinforcing agent, a filler, a lubricant, a mold-releasing agent, a nucleating agent, a plasticizing agent, a flowability-improving agent, and a charge-preventing agent. Examples of the antioxidant include: a sulfur-containing acidic compound or a derivative formed from the acidic compound; a phenol-based stabilizer; a phosphorus-based antioxidant; a thioether-based stabilizer; a hindered amine-based stabilizer; and an epoxy-based stabilizer. Moreover, examples of the ultraviolet ray absorber include a benzotriazole-based ultraviolet ray absorber and a triazine-based ultraviolet ray absorber.

The (B) component is rosin ester, and is a reactant of rosin and C1-9 monohydric alcohol.

As the rosin being a constituent of the (B) component, various well-known rosins may be used without any particular limitation. Examples of the rosin include: natural rosins such as Indonesia rosin, gum rosin, tall oil rosin, and wood rosin; refined rosin obtained by refining the natural rosin; hydrogenated rosin obtained by a hydrogenation reaction of the natural rosin; and disproportionated rosin obtained by a disproportionation reaction of the natural rosin. A plurality of rosins may be used. Among those rosins, in view of suppressing coloring of the molded product, it is preferred that the disproportionated rosin and the hydrogenated rosin be adopted.

The refined rosin can be obtained through various well-known methods such as a distillation method, an extraction method, and a recrystallization method. Examples of the distillation method include a method of distilling the natural rosin typically under a temperature of from about 200°C to about 300°C and a reduced pressure of from about 0.01 kPa to about 3 kPa. Examples of the extraction method include a method of obtaining an alkali water solution of the natural rosin, extracting non-soluble unsaponifiables with various organic solvents, and thereafter neutralizing a water layer. Examples of the recrystallization method include a method of solving the natural rosin in an organic solvent as a good solvent, distilling the solvent to produce a dense solution, and further adding an organic solvent as a poor solvent.

The disproportionated rosin can be obtained through various well-known methods. Examples of the method of obtaining the disproportionated rosin include a method of causing a thermal reaction of raw-material natural rosin or refined rosin having been subjected to refining under the presence of a disproportionated catalyst. As the disproportionated catalyst, there may be used various well-known disproportionated catalysts including: supported catalysts such as palladium carbon, rhodium carbon, and platinum carbon; metal powders of nickel and platinum; and iodine or iodides such as iron iodide. The amount of the catalyst to be used is, with respect to 100 parts by weight of resin, typically from about 0.01 part by weight to about 5 parts by weight, preferably, from about 0.01 part by weight to 1 part by weight. A reaction temperature is from about 100°C to about 300°C, preferably, from about 150°C to about 290°C. It is preferred that the disproportionated rosin be refined by the distillation method in view of achieving higher color tone of the rosin ester to be obtained.

The hydrogenated rosin can be obtained by hydrogenation of the rosin through use of well-known hydrogenation conditions. Examples of the method of obtaining the hydrogenated rosin include a method of heating the rosin to a temperature of from about 100°C to 300°C under the presence of the hydrogenation catalyst with a hydrogen pressure of from about 2 MPa to about 20 MPa. Moreover, it is preferred that the hydrogen pressure be from about 5 MPa to about 20 MPa and that the reaction temperature be from about 150°C to about 300°C. As the hydrogenation catalyst, there may be used various well-known hydrogenation catalysts such as supported catalysts, metal powders, iodine, and iodides. Examples of the supported catalyst include palladium carbon, rhodium carbon, ruthenium carbon, and platinum carbon. Examples of the metal powder include nickel and platinum. Examples of the iodide include iron iodide. Among those, a palladium-based catalyst, a rhodium-based catalyst, a ruthenium-based catalyst, and a platinum-based catalyst are preferred because of a higher hydrogenation rate and a shorter hydrogenation time of the rosin to be obtained. It is preferred that the amount of the hydrogenation catalyst to be used be, with respect to 100 parts by weight of the rosin, typically from about 0.01 part by weight to about 5 parts by weight, more preferably, from about 0.01 part by weight to 2 parts by weight.

As the alcohol being a constituent of the (B) component, the C1-9 monohydric alcohol is essentially used. When monohydric alcohol with carbon number exceeding 9 is used, the (B) component to be obtained is less likely to be compatible with the (A) component, with the result that the (B) component in a liquid form having been separated from the molded product becomes more liable to seep out. Moreover, it is preferred that C1-8 monohydric alcohol be used because the (B) component to be obtained is well compatible with the (A) component and the molded product also exerts excellent bleedout resistance. Specific examples of the C1-8 monohydric alcohol include methanol, ethanol, n-propanol, isopropanol, n-butanol, sec-butanol, tert-butyl alcohol, n-octyl alcohol, and 2-ethylhexyl alcohol. A plurality of those components may be used. Moreover, in a similar view point, it is preferred to use the C1-4 monohydric alcohol, more preferably, methanol or ethanol.

The (B) component has a Gardner color scale of equal to or smaller than 1, more preferably, a Hazen color scale of equal to or smaller than 200 H. The Gardner color scale of rosin ester is equal to or smaller than 1, and hence the molded product is less liable to be colored. The Gardner color scale and the Hazen color scale are measured in Gardner unit and Hazen unit, respectively, in accordance with JIS K 0071.

The (B) component has a glass transition temperature (Tg) of equal to or less than -15°C. With Tg of equal to or less than -15°C, a molded product having excellent flexibility can be obtained. Moreover, in view of excellence in bleedout resistance of the molded product, it is preferred that Tg be from -40°C to -15°C. The glass transition temperature is measured by the method defined in JIS K 7121.

According to a particular embodiment of the present invention, the (B) component typically has an esterification degree of equal to or larger than 94 weight%, preferably, equal to or larger than 96 weight%. The esterification degree is determined through use of Formula (1) based on a total entire peak area given at the time of gel permeation chromatography (GPC) measurement for the (B) component and a peak area corresponding to monoester body in the (B) component. As the esterification degree is larger, the (B) component has a higher initial color tone, and coloring is more likely to be suppressed at the time of molding.

$$\text{Esterification degree (\%)} = [A/\text{total entire peak area}] \times 100 \quad (1)$$

In Formula (1), A represents a peak area (peak area corresponding to the monoester body in the rosin ester) of the weight-average molecular weight (polystyrene conversion value) of 240.

In the (B) component, a content of abietic acid-type resin acid and ester thereof having a conjugated double bond without an aromatic ring is less than 1 weight%. With such content, the molded product becomes less liable to be colored. Moreover, in the similar view point, it is preferred that the content be less than 0.5 weight%, more preferably, substantially 0 weight% (to the extent that cannot be detected). The content can be determined by preparing a solution of rosin ester having been subjected to the following pretreatment and performing gas chromatography analysis (GC).

(Sample Pretreatment Method)

The rosin ester of 10 mg was precisely weighed, and 2 mL of a mixture liquid containing MeOH/toluene (50/50) was added to dissolve the rosin ester. Then, trimethylsilyldiazomethane 10% hexane solution was dropped to subject the sample to methyl esterification, and analysis was performed.

(GC Measurement Conditions)

Model: Agilent 6890 Series
Column: BDS (manufactured by Supelco) 0.3mmΦ×25m, film thickness 0.25 μm
Detector: hydrogen flame ionization detector (FID)
Column temperature: 190°C constant, 30 minutes

Injection port temperature: 250°C
Detector temperature: 280°C
Carrier gas: $N_2$ 100 kPa, 2.2 mL/min
Split ratio: 50/1
Injection amount: 1.0 μL

The abietic acid-type resin acid having a conjugated double bond without an aromatic ring contains an abietic acid and an isomer thereof. Examples of the isomer of the abietic acid include neoabietic acid, levopimaric acid, and palustric acid. The isomer of the abietic acid does not include dehydroabietic acid with an aromatic ring. Moreover, the isomer of the abietic acid does not include resin acids of pimaric acid types such as pimaric acid, isopimaric acid, and sandaracopimaric acid.

A manufacturing method for the (B) component is not particularly limited. Any well-known esterification method may be employed as a manufacturing method. The charge amounts of the rosin and alcohol are not particularly limited. The charge amount is typically determines such that OH radical of alcohol/COOH radical of rosin (equivalent ratio) falls within a range of from about 0.8 to 8, preferably from about 3 to 7. The reaction temperature of the esterification reaction is typically from about 150°C to about 320°C, preferably from about 150°C to about 300°C. The reaction time is typically from about 2 hours to about 24 hours, preferably, from about 2 hours to about 7 hours. Further, in the aim of shortening the reaction time, the esterification reaction may proceed under the presence of catalyst. Examples of the catalyst include: acid catalysts such as a paratoluene sulfonic acid; metal hydroxides such as calcium hydroxide and magnesium hydroxide; and metal oxides such as calcium oxide and magnesium oxide. Water is produced as a result of the esterification reaction. Therefore, the reaction can proceed while removing the produced water outside the system. More in consideration of the color tone of the obtained rosin ester, it is desired that the reaction be performed under inactive gas stream. The reaction may be performed under the pressurized condition as needed. Moreover, the reaction may be performed in an organic solvent which is non-reactive with respect to the rosin and alcohol. Examples of the organic solvent include hexane, cyclohexane, toluene, and xylene. When the organic solvent is used, the organic solvent or an unreacting raw material can be distilled under a decompressed state as needed.

When the disproportionated rosin, or the hydrogenated rosin is to be used as the rosin, refining, disproportionation, or hydrogenation of the natural rosin may be performed after esterification of the natural rosin and alcohol. Alternatively, or the natural rosin may be refined, disproportionated, or hydrogenated, and thereafter the obtained rosin and alcohol may be esterified.

According to the present invention, it is preferred that the (B) component have an acid value of equal to or smaller than 2 mg KOH/g, more preferably, equal to or smaller than 1 mg KOH/g. With this, without decomposition of the (A) component, flexibility is given to the molded product. The acid value is measured in accordance with JIS K 0070.

According to a first and second aspect of the present invention, the (B) component contains dihydroabietic acid ester by a content of equal to or larger than 15 weight% or contains tetrahydroabietic acid ester by a content of equal to or larger than 10 weight%, respectively, wherein the total content of the resin acid and ester thereof in the (B) component is 100 weight%. With this, coloring is less liable to occur when the (A) component and the (B) component are molded.

According to a third aspect of the present invention, the (B) component contains dehydroabietic acid ester by a content of equal to or larger than 40 weight%, wherein the total content of the resin acid and ester thereof in the (B) component is 100 weight%. With this, coloring is less liable to occur when the (A) component and the (B) component are molded.

The (B) component may contain other additives within the range of not impairing the effect of this embodiment, as needed. Examples of other additives include an antioxidant, a polymerization inhibitor, and a sensitizer. It is preferred that other additives occupy 0.5 part by weight to 10 parts by weight with respect to the (B) component being 100 parts by weight.

The composite plastic molded product can be manufactured by various well-known methods. the composite plastic molded product can be manufactured by, for example, a method of molding the (A) component and the (B) component after kneading at a temperature of from about 220°C to about 280°C for 0.5 hours to 6 hours, or a method of molding after adding the (B) component to the preheated (A) component and kneading the (A) component and the (B) component.

A content ratio (solid weight) of the (A) component and the (B) component is not particularly limited. In view of excellence in flexibility and moldability of the molded product, it is preferred, according to the present invention, that the content ratio be (A)/(B)=40/60 to 90/10.

Molding conditions cannot be uniquely defined. However, it is only required that the temperature and the pressure be suitably adjusted in consideration of deformation of the molded product intended to obtain. Examples of the molding method include injection molding, extrusion molding, transfer molding, blow molding, hot press molding, calendar molding, coating molding, cast molding, dipping molding, vacuum molding, and transfer molding.

In the above, one embodiment of the present invention is described. The present invention is not particularly limited to the embodiment described above. The embodiment described above mainly described the invention having the following features.

EXAMPLE

The present invention is described more in detail with reference to examples and comparative examples. The present invention is not limited to those examples. In the examples, the unit "%" represents "weight%", and the term "part(s)" represents "part(s) by weight".

Production example 1 (Manufacture of Rosin Ester 1)

Chinese disproportionated rosin (manufactured by Guangxi Wuzhou Arakawa Chemical Industries, Ltd.) of 100g and methanol of 300g are charged into a 1L-autoclave. After removal of oxygen in the system, the temperature was raised to 290°C. The internal temperature of the autoclave reached 14 MPa at maximum. The autoclave was depressurized every 20 minutes to remove water vapors, and the esterification reaction was continued for 2 hours. The obtained reaction liquid was condensed in a rotary evaporator, and then calcium hydroxide of 5 g was added. Then, through simple distillation under conditions with a liquid temperature of from 150°C to 270°C and a pressure of 0.4 kPa, rosin ester 1 of 68 g was obtained as a main fraction of distillation.

Production example 2 (Manufacture of Rosin Ester 2)

Rosin ester 2 of 64 g was obtained in a manner similar to the production example 1 except that the Chinese disproportionated rosin was replaced with highly hydrogenated rosin (manufactured by Forestar Chemical Co., Ltd.).

Production example 3 (Manufacture of Rosin Ester 3)

Rosin ester 3 of 64 g was obtained in a manner similar to the production example 1 except that the Chinese disproportionated rosin was replaced with lowly hydrogenated rosin (Forestar Chemical Co., Ltd.).

Production example 4 (Manufacture of Rosin Ester 4)

Rosin ester 4 of 64 g was obtained in a manner similar to the production example 1 except that the Chinese disproportionated rosin was replaced with distilled disproportionated rosin (manufactured by Arakawa Chemical Industries, ltd.).

Production example 5 (Manufacture of Rosin Ester 5)

The rosin ester 4 of 100 g obtained in the production example 4 and 2-propanol of 100g were charged into a 300 ml flask provided with a mixing device, a cooling pipe, and a nitrogen introduction pipe and was raised in temperature to 40°C to be melted. After that, the container was soaked in a constant temperature circulator. The temperature was lowered from 40°C, and seed crystal was charged in midcourse. After cotton-like white crystal rapidly increased, the temperature of the device was lowered to 5°C and maintained for 1.5 hours. After that, in suction filtration, the crystal was cleaned with 2-propanol of the amount corresponding to one-third to one-second of the charge amount of the raw material, and was dried under reduced pressure with at 50°C and 10 Torr. The recrystallization operation is further repeated for the obtained crystal, and then the rosin ester 5 of 28 g was obtained.

Production example 6 (Manufacture of Rosin Ester 6)

Rosin ester 6 of 65 g was obtained in a manner similar to the production example 1 except that the Chinese disproportionated rosin was replaced with the distilled disproportionated rosin (Arakawa Chemical Industries, ltd.) and the methanol was replaced with ethanol.

Comparative Production example 1 (Manufacture of Rosin Ester 7)

Rosin ester 7 of 65 g was obtained in a manner similar to the production example 1 except that the Chinese disproportionated rosin was replaced with Chinese hydrogenated rosin (manufactured by Wuzhou Sun Shine Forestry & Chemicals Co., Ltd. Of Guangxi).

Comparative Production example 2 (Manufacture of Rosin Ester 8)

Rosin ester 8 of 65 g was obtained in a manner similar to the production example 1 except that the Chinese disproportionated rosin was replaced with Chinese gum rosin (manufactured by Guangxi Wuzhou Arakawa Chemical Industries, Ltd.).

Comparative Production example 3 (Manufacture of Rosin Ester 9)

Rosin ester 9 of 65 g was obtained in a manner similar to the production example 1 except that the methanol was replaced with 1-decanol.

Moreover, Hercolyn D (hydrogenated rosin methyl ester, manufactured by Eastman Chemical Company) (reference comparative example 4) was used as the rosin ester 10.

Physical properties of the rosin esters 1 to 10 were measured as follows. Results thereof are shown in Table 1.

<Melting Point and Glass Transition Temperature (Tg)>

Measurement was performed with differential scanning calorimetry (thermal flux DSC) defined by JIS K 7121.

(DSC measurement device: DSC8230B, manufactured by Rigaku Corporation)

<Color Tone>

The color tone was measured in Gardner unit and Hazen unit based on JIS K 0071.

<Acid Value>

The acid value was measured based on JIS K 0070.

<Calculation of Esterification Degree>

The rosin esters 1 to 10 were dissolved in tetrahydrofuran to prepare a 0.5% solution. The GPC measurement was performed on the solution under the following conditions, and the esterification degree was measured with the following Formula (1).

(GPC Measurement Conditions)

Model: Produce name "HLC-8220", manufactured by TOSOH CORPORATION
Columns:

Product name "TSKgel G2500HXL", manufactured by TOSOH CORPORATION, 1
Product name "TSKgel G2000HXL", manufactured by TOSOH CORPORATION, 2
Product name "TSKgel G1000HXL", manufactured by TOSOH CORPORATION, 1
where the columns are connected to one another

Eluent flow rate: tetrahydrofuran, 1mL/min
Measurement temperature: 40°C
Detector: RI

$$\text{Esterification degree (\%) of rosin esters 1 to 10} = [A/\text{total entire peak area}] \times 100 \ldots (1)$$

In Formula (1), A represents a peak area (peak area corresponding to the monoester body in the rosin esters 1 to 8) of the weight-average molecular weight (polystyrene conversion value) of 240.

Table 1

| | | Color tone | Melting point (°C) | Tg (°C) | Acid value (mgKOH/g) | Esterification degree (%) |
|---|---|---|---|---|---|---|
| Manufacture Example 1 | Rosin ester 1 | 160H | Liquid | -23 | < 1 | 97 |
| Manufacture Example 2 | Rosin ester 2 | 30H | Liquid | -30 | < 1 | 99 |
| Manufacture Example 3 | Rosin ester 3 | 30H | Liquid | -30 | < 1 | 99 |
| Manufacture Example 4 | Rosin ester 4 | 40H | Liquid | -22 | < 1 | 99 |
| Manufacture Example 5 | Rosin ester 5 | 10H | 65 | -17 | <1 | 99 |
| Manufacture Example 6 | Rosin ester 6 | 40H | Liquid | -21 | <1 | 99 |
| Comparative Manufacture Example 1 | Rosin ester 7 | 120H | Liquid | -29 | <1 | 98 |
| Comparative Manufacture Example 2 | Rosin ester 8 | 1G | Liquid | -25 | <1 | 99 |
| Comparative Manufacture Example 3 | Rosin ester 9 | 160H | Liquid | -15 | 2.6 | 98 |
| Reference Comparative Example 4 | Rosin ester 10 | 5G | Liquid | -27 | 4.5 | 89 |

<Analysis of Composition Ratio of Rosin Ester>

Analysis on a composition ratio of rosin component (resin acid component) in the rosin ester was performed by gas chromatography analysis (GC). The rosin ester was subjected to the following pretreatment, and the solution was adjusted. Then, the GC measurement was performed under the following conditions. Results are shown in Table 2.

(Sample Pretreatment Method)

The rosin ester of 10 mg was precisely weighed, and 2 mL of a mixture liquid containing methanol/toluene (50/50) was added to dissolve the rosin ester. Then, trimethylsilyldiazomethane 10% hexane solution was dropped to subject the sample to methyl esterification, and analysis was performed.

(GC Measurement Conditions)

Model: Agilent 6890 Series
Column: BDS (manufactured by Supelco) 0.3mmΦ×25m, film thickness 0.25 μm
Detector: hydrogen flame ionization detector (FID)
Column temperature: 190°C constant, 30 minutes
Injection port temperature: 250°C
Detector temperature: 280°C
Carrier gas: $N_2$ 100 kPa, 2.2 mL/min
Split ratio: 50/1
Injection amount: 1.0 μL

The composition ratio of the rosin ester was calculated through division of the following retention times (hereinafter also referred to as "RT").

Neutral component: peak detected in RT of from 0 minute to 4.1 minute

Tetrahydroabietic acid ester: among peaks detected at RT of from 4.1 minute to 10 minute, peaks detected at 4.6 minute, 5.1 minute, 5.3 minute, 5.6 minute, 5.8 minute, 6.0 minute, 6.1 minute, 6.4 minute, and 7.0 minute

Dihydroabietic acid ester: among peaks detected at RT of from 4.1 minute to 10 minute, other than those of tetrahydro abietic acid ester

Abietic acid ester: peak detected at RT of 11.2 minute

Dehydroabietic acid ester: peak detected at RT of 11.7 minute

Table 2

|  | Abietic component (%) | Dihydroabietic ester (%) | Tetrahyd roabietic ester (%) | Dehydro abietic ester (%) | Neutral Component (%) | Other resin acid (%) |
|---|---|---|---|---|---|---|
| Rosin ester 1 | 0.1 | 33.4 | 0.3 | 63.5 | 1.2 | 1.4 |
| Rosin ester 2 | - | - | 93.4 | 3.2 | 3.4 | - |
| Rosin ester 3 | - | 74.7 | 18.2 | 6.7 | 0.3 | 0.1 |
| Rosin ester 4 | - | 21.4 | 0.2 | 73.3 | 2.0 | 3.1 |
| Rosin ester 5 | - | - | 2.2 | 97.4 | - | 0.4 |
| Rosin ester 6 | - | 21.4 | 0.2 | 73.3 | 2.0 | 3.1 |
| Rosin ester 7 | 1.6 | 68.9 | 20.6 | 6.9 | 1.8 | 0.2 |
| Rosin ester 8 | 84.7 | - | - | 4.2 | - | 11.1 |
| Rosin ester 9 | 0.1 | 33.4 | 0.3 | 63.5 | 1.2 | 1.4 |
| Rosin ester 10 | 7.6 | 68.9 | 3.6 | 9.9 | 2.9 | 0.2 |

<Preparation of Composite Plastic Molded Product (Polycarbonate) >

Examples 1 to 7, Comparative Examples 1 to 8

Polycarbonate (trade name "PC (manufactured by Stella)", manufactured by Japan Testpanel Co., Ltd., weight-average molecular weight: 44,000) of 25 g and the rosin ester 1 of 25 g were charged into a reactor vessel provided with a thermometer and a cooling pipe, and then the temperature was raised to 240°C. After mixing for 1 hour to cool it to the room temperature, press molding was performed through use of a heating press (temperature: 230°C, preheating time: 2 minutes, pressure: 10 MPa for 1 minute) to obtain the composite plastic molded product. Composite plastic molded products were prepared with respective compositions shown in Table 3, and the following items were evaluated.

<Colored or Uncolored>

It was visually checked to see if the plastic molded product was colored or uncolored.

o: uncolored
×: colored

<Bleedout Resistance>

It was visually checked to see if the additive seeps out from the plastic molded product, and evaluation was made based on the following criteria.

(Evaluation Criteria)

◎: no additive seeped out, and clear
○: unclear, but no additive seeped out
Δ: unclear, and additive slightly seeped out
×: unclear, and additive seeped out

<Flexibility>

The plastic molded product was held by both hands, and a force is applied downward. Then, the flexibility was evaluated based on the following criteria.

(Evaluation Criteria)

◎: no crack in molded product even after elapse of time

○: liable to crack after elapse of time, but no crack immediately after molding

×: crack in molded product immediately after molding

<Moldability (melt flow rate (MFR))>

The plastic molded product was measured through use of a melt indexer (manufactured by Toyo Seiki Seisaku-sho, Ltd, type: P-01) under conditions with a temperature of 230°C and a load of 2.16 kg. It indicates that moldability is more excellent as the value is larger.

Table 3

|  | (A) component | | Additive | | Colored or noncolored | Bleedout resiscance | Flexibility | Moldability (g/ 10min) |
|---|---|---|---|---|---|---|---|---|
| Example 1 | A-1 | 50 | Rosin ester 1 | 50 | ○ | ◎ | ◎ | 449.7 |
| Example 2 | A-1 | 50 | Rosin ester 2 | 50 | ○ | ○ | ○ | 464.3 |
| Example 3 | A-1 | 50 | Rosin ester 3 | 50 | ○ | ○ | ○ | 459.9 |
| Example 4 | A-1 | 50 | Rosin ester 4 | 50 | ○ | ◎ | ◎ | 446.5 |
| Example 5 | A-1 | 50 | Rosin ester 5 | 50 | ○ | ◎ | ◎ | 442.5 |
| Example 6 | A-1 | 50 | Rosin ester 6 | 50 | ○ | ○ | ◎ | 450.9 |
| Example 7 | A-1 | 40 | Rosin ester 4 | 60 | ○ | ◎ | ◎ | 735.1 |

(continued)

| | (A) component | | Additive | | Colored or noncolored | Bleedout resiscance | Flexibility | Moldability (g/ 10min) |
|---|---|---|---|---|---|---|---|---|
| Comparative Example 1 | A-1 | 50 | Rosin ester 7 | 50 | × | ○ | ○ | 461.1 |
| Comparative Example 2 | A-1 | 50 | Rosin ester 8 | 50 | × | ◎ | ◎ | 458.6 |
| Comparative Example 3 | A-1 | 50 | Rosin ester 9 | 50 | ○ | × | ◎ | Not measured |
| Comparative Example 4 | A-1 | 50 | Rosin ester 10 | 50 | × | ○ | ○ | 439.3 |
| Comparative Example 5 | A-1 | 50 | DOP | 50 | ○ | × | ◎ | Not measured |
| Comparative Example 6 | A-1 | 50 | Tuftec | 50 | ○ | Δ | ◎ | 19.3 |
| Comparative Example 7 | A-1 | 50 | METABLEN | 50 | × | × | × | Not measured |
| Comparative Example 8 | A-1 | 100 | - | - | ○ | ◎ | × | 0.7 |

- (A-1) component: polycarbonate , trade name "PC (manufactured by Stella)", manufactured by Japan Testpanel Co., Ltd.
- DOP: dioctyl phthalate
- Tuftec: hydrogenated styrene-based thermoplastic resin, trade name "Tuftec H1062", manufactured by Asahi Kasei Corporation
- METABLEN: rubber-based resin, trade name "METABLENT L-1000", manufactured by Mitsubishi Chemical Corporation

<Preparation of Composite Plastic Molded Product (polyamide)>

Example 8, Comparative Examples 9 and 10

Polyamide (trade name "Unitika nylon 6 A1030FR", UNITIKA,LTD.) of 45 g and the rosin ester 3 of 5 g were charged into a reactor vessel provided with a thermometer and a cooling pipe, and then the temperature was raised to 240°C. After mixing for 1 hour to cool it to the room temperature, press molding was performed through use of a heating press (temperature: 230°C, preheating time: 2 minutes, pressure: 10 MPa for 1 minute) to obtain the composite plastic molded product. Moreover, composite plastic molded products were prepared with respective compositions shown in Table 4, and the bleedout resistance, flexibility, and moldability were evaluated under the conditions similar to those described above.

Table 4

| | (A) component | | Additive | | Bleedout resistance | Flexibility | Moldability (g/ 10min) |
|---|---|---|---|---|---|---|---|
| Example 8 | A-2 | 90 | Rosin ester 3 | 10 | ○ | ◎ | 22.6 |
| Comparative Example 9 | A-2 | 100 | - | - | ○ | ◎ | 13.6 |
| Comparative Example 10 | A-2 | 90 | DOP | 10 | × | ◎ | Not measured |

**Claims**

1. A composite plastic molded product, comprising:

   (A) engineering plastic that is at least one kind selected from the group consisting of polycarbonate, polyamide, and polyester; and
   (B) rosin ester being a reactant of rosin and C1-9 monohydric alcohol, in which the content of abietic acid-type resin acid and ester thereof having a conjugated double bond without an aromatic ring is less than 1 weight%, measured according to the description, and in which a glass transition temperature, measured by the method defined in JIS K 7121, is equal to or less than -15°C,

   wherein the rosin ester contains dihydroabietic acid ester by equal to or larger than 15 weight% or contains tetrahydroabietic acid ester by equal to or larger than 10 weight%, wherein the total content of resin acid and ester thereof is 100 weight%, or
   wherein the rosin ester contains dehydroabietic acid ester by equal to or larger than 40 weight% wherein the total content of resin acid and ester is 100 weight%.

2. The composite plastic molded product according to claim 1, wherein the (B) component has an esterification degree of equal to or larger than 94 weight%, determined according to the description.

3. The composite plastic molded product according to any one of claims 1 to 2, wherein the (B) component has an acid value of equal to or smaller than 2 mgKOH/g, as determined based on JIS K 0070.

4. The composite plastic molded product according to any one of claims 1 to 3, wherein the rosins include at least one of disproportionated rosin and hydrogenated rosin.

5. The composite plastic molded product according to any one of claims 1 to 4, wherein the (A) component and the (B) component have a content ratio (solid weight) of (A)/(B)=40/60 to 90/10.


**Patentansprüche**

1. Ein Formteil aus Verbundkunststoff mit:

   (A) mindestens einem technischen Kunststoff aus der folgenden Gruppe: Polycarbonat, Polyamid und Polyester, und
   (B) Harzester, einem Reaktionsmittel aus Harz und C1-9 einwertigem Alkohol, in dem der beschreibungsgemäß gemessene Gehalt an Harzsäure vom Typ Abietinsäure und deren Ester mit konjugierter Doppelbindung ohne aromatischen Ring unter 1 Gewichtsprozent liegt

   und in dem die nach der in JIS K 7121 gemessene Glasübergangstemperatur kleiner gleich -15 °C beträgt,
   wobei der Harzester größer gleich 15 Gewichtsprozent Dihydro-Abietinsäureester oder größer gleich 10 Gewichtsprozent Tetra-Abietinsäureester enthält, wobei der Gesamtgehalt an Harzsäure und deren Ester 100 Gewichtsprozent entspricht oder
   wobei der Harzester größer gleich 40 Gewichtsprozent Dehydro-Abietinsäureester enthält,
   wobei der Gesamtgehalt von Harzsäure und Ester 100 Gewichtsprozent ausmacht.

2. Das Formteil aus Verbundkunststoff gemäß Anspruch 1, wobei der Bestandteil (B) einen beschreibungsgemäßen Veresterungsgrad größer gleich 94 Gewichtsprozent aufweist.

3. Das Formteil aus Verbundkunststoff gemäß einem der Ansprüche 1 bis 2, wobei der Bestandteil (B) einen auf der Grundlage von JIS K 0070 bestimmten Säurewert kleiner gleich 2 mgKOH/g aufweist.

4. Das Formteil aus Verbundkunststoff gemäß einem der Ansprüche 1 bis 3, wobei die Harze mindestens ein disproportioniertes Harz und ein hydriertes Harz enthalten.

5. Das Formteil aus Verbundkunststoff gemäß einem der Ansprüche 1 bis 4, wobei der Bestandteil (A) und Bestandteil (B) ein Gehaltsverhältnis (Festkörpergewicht) von (A)/(B)=40/60 bis 90/10 aufweisen.

**Revendications**

1. Article moulé en plastique composite, comprenant :

(A) du plastique d'ingénierie qui est au moins d'un type sélectionné parmi le groupe constitué de polycarbonate, de polyamide, et de polyester ; et
(B) de la colophane estérifiée étant un réactif de colophane et d'alcool monohydrique en C1 à C9, dans laquelle la teneur d'acide résinique de type acide abiétique et d'ester de celui-ci présentant une double liaison conjuguée sans cycle aromatique est inférieure à 1 % en poids, mesurée conformément à la description, et dans laquelle la température de transition vitreuse, mesurée conformément à la méthode définie dans JIS K 7121, est inférieure ou égale à -15 °C,

où la colophane estérifiée contient un ester d'acide dihydroabiétique à hauteur de ou à plus de 15 % en poids ou contient un ester d'acide tétrahydroabiétique à hauteur de ou à plus de 10 % en poids, où la teneur totale d'acide résinique et d'ester de celui-ci est de 100 % en poids, ou
où la colophane estérifiée contient un ester d'acide déhydroabiétique à hauteur de ou à plus de 40 % en poids, où la teneur totale d'acide résinique et d'ester est de 100 % en poids.

2. Article moulé en plastique composite selon la revendication 1, dans lequel le composant (B) présente un degré d'estérification supérieur ou égal à 94 % en poids, déterminé conformément à la description.

3. Article moulé en plastique composite selon l'une quelconque des revendications 1 et 2, dans lequel le composant (B) présente un indice d'acidité inférieur ou égal à 2 mgKOH/g, déterminé sur la base de JIS K 0070.

4. Article moulé en plastique composite selon l'une quelconque des revendications 1 à 3, dans lequel la colophane inclut au moins l'une de la colophane dismutée et de la colophane hydrogénée.

5. Article moulé en plastique composite selon l'une quelconque des revendications 1 à 4, dans lequel le composant (A) et le composant (B) présentent un rapport de teneur (masse solide) de (A)/(B) = de 40/60 à 90/10.

**EP 3 527 627 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012072203 A
- WO 2013069365 A
- JP H09241515 B
- JP H0927773 B